# EUROPÄISCHE PATENTSCHRIFT

(11) **EP 1 332 588 B1**
(45) Veröffentlichungstag und Bekanntmachung des Hinweises auf die Patenterteilung: **04.06.2014**
(21) Anmeldenummer: 01982295.6
(22) Anmeldetag: 15.09.2001
(51) Int. Cl.: H04L 12/40, H04L 29/02, H04L 29/08

(54) **DATENBUS, INSBESONDERE IN KRAFTFAHRZEUGEN**
DATA BUS, PARTICULARLY IN VEHICLES
BUS DE DONNEES NOTAMMENT DESTINE A DES VEHICULES

(30) Priorität: 08.11.2000 DE 10055163
(43) Veröffentlichungstag der Anmeldung: 06.08.2003
(73) Patentinhaber: Bayerische Motoren Werke Aktiengesellschaft, 80809 München (DE)
(72) Erfinder: WIENS, Alexander, 71139 Ehningen (DE); KRAMMER, Josef, 83607 Holzkirchen (DE); KAINDL, Michael, 84061 Ergoldsbach (DE); FRÖSCHL, Joachim, 82211 Herrsching (DE)
(86) Internationale Anmeldenummer: PCT/EP2001/010687
(87) Internationale Veröffentlichungsnummer: WO 2002/037923

(56) Entgegenhaltungen:
- ALAN DEVINE: "Local Interconnect Network (LIN) Demonstration" MOTOROLA SEMICONDUCTOR APPLICATION NOTE, 31. März 2000 (2000-03-31), Seiten 1-68, XP002204154 East Kilbride, Scotland

## Beschreibung

Die Erfindung bezieht sich auf ein Datenbussystem, insbesondere in Kraftfahrzeugen und in der Automatisierungstechnik, nach dem Oberbegriff des Patentanspruchs 1.

Ein derartiger Datenbus ist beispielsweise durch den sogenannten LIN-Bus bekannt. Die Besonderheiten des LIN-Busses sind im Zeitschriftenartikel "LIN-Bus billig und effizient", Elektronik Automotive, Juni 2000, S. 18 ff., beschrieben.

Der LIN-Bus ist ein Datenbus für Kraftfahrzeuge nach dem Master-Slave-Prinzip. Die Slave-Busteilnehmer (Nebensteuereinheit bzw. gesteuertes Gerät) führen aufgrund von adressierten Befehlstelegrammen des Masters (Hauptsteuereinheit) eine Vielzahl von einfachen Schalt-Funktionen aus. Ein Befehlstelegramm enthält zur Adressierung ein Kennungsfeld (IDENT FIELD), für das nur eine beschränkte Anzahl von Kennungsinformationen vorgesehen ist. Derzeit stehen lediglich 64 Kennungsinformationen, auch Identifier (LIN-ID) genannt, zur Verfügung. Der LIN-Bus soll für eine Vielzahl von verschiedenen einfachen Funktionen im Fahrzeug eingesetzt werden, so z.B. zum Ein- und Ausschalten von Lampen, zum Ansteuern von Stellmotoren (beispielsweise für die Fensterheber oder die Heiz- und Klimaanlage), zum Einlesen von Sensorwerten (beispielsweise für die Reifendrucküberwachung oder Temperaturmessungen). Die Anzahl der möglichen Funktionen übersteigt die Anzahl der Identifier um ein Vielfaches, wodurch ein Datenbus-Verbund mit einer Vielzahl von Teil-Bussen erforderlich wird.

Gemäß der derzeitigen Definition des LIN-Busses werden die LIN-ID's fest in einem Slave-Busteilnehmer abgelegt. Ist eine spezielle LIN-ID bereits in einem Slave-Busteilnehmer fest angelegt, so hat dies direkten Einfluss auf die LIN-ID's der anderen Slave-Busteilnehmer. Man muss schon im Voraus die Konfiguration des LIN-Verbundes genau kennen, um LIN-ID's Befehlstelegrammen zuordnen zu können. Dadurch wird der Systementwurf erschwert sowie die Verwendung von Gleichteilen annähernd unmöglich. Die Änderung eines Slave-Busteilnehmers hat oft zur Folge, dass alle am Verbund liegenden Slaves ebenfalls geändert werden müssen. Im ff. wird für die Slaves bzw. Slave-Busteilnehmer auch der Begriff Nebensteuereinheit im Unterschied zur Hauptsteuereinheit (Master) verwendet.

Es ist Aufgabe der Erfindung, einen Datenbus eingangs genannter Art im Hinblick auf die oben genannten Nachteile zu verbessern.

Diese Aufgabe wird durch die Merkmale des Patentanspruchs 1 gelöst. Vorteilhafte Weiterbildung der Erfindung sind die Gegenstände der abhängigen Ansprüche.

Erfindungsgemäß wird allen Funktionen, die von den Slave-Busteilnehmern des Datenbusses ausgeführt werden können, jeweils mindestens eine Funktionsnummer zugeordnet. Hierbei kann beispielsweise ein, auch für die Lieferanten der Slave-Busteilnehmer und der Hauptsteuereinheit verbindlicher Katalog von Funktionsnummern zur Verfügung gestellt werden. Jedem Lieferanten von Slave-Busteilnehmern kann ein Funktionsnummernbereich zugeteilt werden. Jeder Slave-Busteilnehmer weist einen ersten nicht-flüchtigen Speicherbereich auf, in dem z.B. bereits im Werk des Lieferanten die Funktionsnummern der Funktionen fest abgespeichert sind, die von dem jeweiligen Slave-Busteilnehmer ausführbar sind. Jeder Slave-Busteilnehmer weist einen zweiten programmierbaren Speicherbereich auf, in dem durch ein Sonderbefehlstelegramm der elektronischen Hauptsteuereinheit, insbesondere beim Initialisieren des fertig aufgebauten Datenbusses, zu jeder im ersten Speicherbereich abgespeicherten Funktionsnummer eine für das Kennungsfeld vorgesehene Kennungsinformation (Identifier, ID) abgespeichert werden kann. Die elektronische Hauptsteuereinheit kann ein ständig mit dem Datenbus verbundenes intelligentes Steuergerät und/oder ein zeitweise am Datenbus anschließbares Diagnosegerät sein.

Durch die Erfindung soll ein Slave-Busteilnehmer im Unterschied zum Stand der Technik keine feste Steuergeräte- bzw. Komponentenadresse erhalten, um den Verwaltungsaufwand solcher Adressen zu minimieren. Die Adressierung einer Funktion bzw. einer Nachricht findet erfindungsgemäß nicht vorwiegend komponentenbezogen, sondern funktionsbezogen statt. Beispielsweise kann durch die Erfindung verschiedenen Slave-Busteilnehmern, die nicht zwingend baugleiche Komponenten sein müssen, aber gleichzeitig dieselbe Funktion ausführen sollen, zur Durchführung dieser gemeinsamen Funktion dieselbe Kennungsinformation zugeordnet werden. Hierdurch können Kennungsinformationen in einem konkreten Busverbund eingespart werden. Dadurch, dass die Nachricht immer zunächst von allen Slave-Busteilnehmern empfangen wird, wird die adressierte Funktion von den Slave-Busteilnehmern zeitgleich ausgeführt.

Vorzugsweise enthalten die Slave-Busteilnehmer eine Kodiervorrichtung zur bedarfsweisen Erzeugung eines zusätzlichen Identifiziercodes, durch den die Slave-Busteilnehmer im Sonderbefehlstelegramm der elektronischen Hauptsteuereinheit unterscheidbar gemacht werden können. Dies ist insbesondere dann erforderlich, wenn zu ein und derselben Funktionsnummer in unterschiedlichen Slave-Busteilnehmern unterschiedliche Kennungsinformationen abgespeichert werden sollen. Durch die Kennungsinformation ist bei den meisten Anwendungen bereits auch ohne Identifiziercode eine eindeutige Identifikation eines Slave-Busteilnehmers möglich. Dennoch dient dieser Identifiziercode auch dazu, mehrere identische Gleichteile unterscheidbar zu machen. Der Identifiziercode kann eine kleine Kennung sein (z. B. maximal 8 Bit, ausreichend für 256 Gleichteile an einem Datenbus) und soll möglichst einfach zu erstellen sein. Die Kodiervorrichtung zur Erstellung des Identifiziercodes soll klein und kostengünstig sein. Der Identifiziercode soll vom Systemdesigner variabel und individuell festlegbar sein, wenn es der Systemverbund notwendig macht. Er kann z. B. mittels Jumper, Zapping oder Programmierung realisiert werden. Ein Defaultwert kann vorgegeben werden. Der Defaultwert muss nur geändert werden, wenn der Identifiziercode benötigt wird. Dieser Identifiziercode stellt für sich keine Komponentenadresse dar, kann jedoch insbesondere im Zusammenhang mit einer Funktionsnummer als variable "Komponentenadresse" wirken.

Für das Kennungsfeld des Sonderbefehlstelegramms wird vorzugsweise eine definierte Kennungsinformation vorgesehen, durch die alle Slave-Busteilnehmer angesprochen werden können, bevor die übrigen den Funktionsnummern zugeordneten Kennungsinformationen abgespeichert werden.

Insgesamt wird durch die Erfindung in Form einer sog. "dynamischen ID-Vergabe" eine flexible Adressierung von Befehlstelegrammen ermöglicht.

Zur genaueren Erläuterung der Erfindung ist in der Zeichnung ein Ausführungsbeispiel anhand des LIN-Busses dargestellt. Es zeigt
- Fig. 1: den Grobaufbau des Befehlstelegramms beim LIN-Bus gemäß Protokoll-Spezifikation,
- Fig. 2: den Aufbau eines möglichen Sonderbefehlstelegramms,
- Fig. 3: einen erfindungsgemäßen Datenbus nach der dynamischen Abspeicherung der Kennungsinformationen in den Slave-Busteilnehmern, sowie schematisch eine vereinfachte Telegrammfolge, die in diesem Beispiel zur LIN-ID Vergabe benutzt wird,
- Fig. 4: einen vereinfachten Datenbus, der keinen zusätzlichen Identifiziercode benötigt,
- Fig. 5: einen möglichen Aufbau der Funktionsnummern,
- Fig. 6: zwei unabhängige LIN-Busse mit dynamischer LIN-ID-Vergabe und
- Fig. 7: einen zusammenfassenden einzigen LIN-Bus-Verbund gemäß Fig. 6, indem eine Umordnung der LIN-IDs statt gefunden hat.

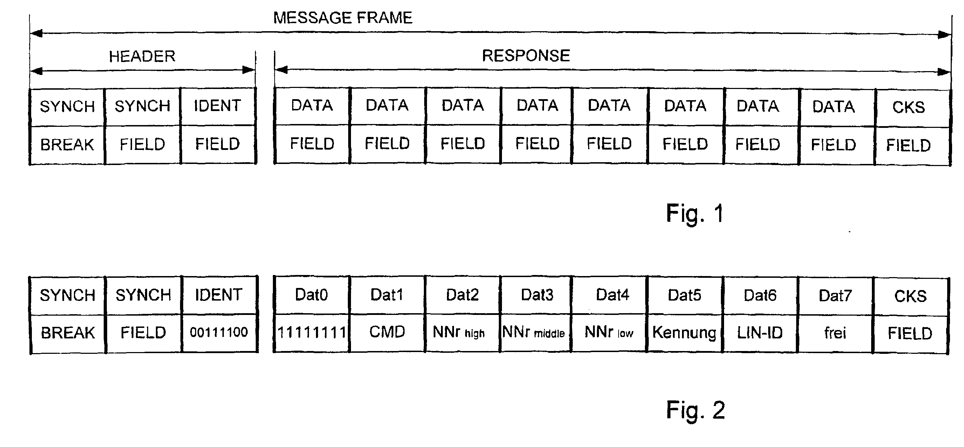

In Fig. 1 ist der Grobaufbau des "normalen" Befehlstelegramms zur Durchführung einer Funktion nach einer Vergabe der Kennungsinformation (im ff. kurz LIN-ID genannt) dargestellt.

Das Befehlstelegramm (MASSAGE FRAME) besteht aus einem Kopfteil (HEADER) und einem Datenteil (RESPONSE). Der Kopfteil (HEADER) enthält ein Startfeld (z.B. 13 Bit) (SYNCH BREAK), eine Taktsynchronisationsinformation (SYNCH FIELD) und das Kennungsfeld (IDENT FIELD). Das Kennungsfeld (IDENT FIELD) enthält lediglich 1 Byte (6 Bit für eigentliche ID sowie zwei Parity-Check Bits), wodurch die Anzahl der UN-ID's auf 64 beschränkt ist. Das Kennungsfeld dient zur Adressierung der Befehle. Im Datenteil folgt üblicherweise der Befehl zur Durchführung einer Funktion in Form von mehreren Datenfeldern (DATA FIELD). Abgeschlossen wird eine Nachricht mit einem Checksummenfeld (CKS Field). (Entspricht derzeitiger LIN-Spezifikation "LIN Protocol Specification Revision 1.1" vom 17.4.2000) Die Funktion kann beispielsweise das Einschalten einer Glühlampe, das Verstellen eines Schrittmotors, das Einlesen eines Sensorwertes oder die Ausgabe eines Diagnosewertes sein.

Fig. 2 zeigt den Aufbau des Sonderbefehlstelegramms im Speziellen für die Funktion der sog. Dynamischen LIN-ID-Vergabe.

Der Eintrag 00111100 im Kennungsfeld (IDENT FIELD) ist eine mögliche definierte LIN-ID, durch die alle Slave-Busteilnehmer angesprochen werden können, bevor die dynamische LIN-ID-Vergabe durchgeführt wird. Die Felder Dat 0 bis Dat 7 entsprechen den Feldern des Datenteils (RESPONSE) des üblichen Befehlstelegramms. Das Feld Dat 0 teilt mit, mit welcher Art von Slave-Busteilnehmern die Hauptsteuereinheit kommunizieren möchte. Der Inhalt von DAT 0 könnte beispielsweise 11111111 sein, wenn alle am Datenbus befindlichen Teilnehmer diese Nachricht auswerten sollen. Über das Feld Dat 0 können beispielsweise auch definierte Gruppen von Slave-Busteilnehmern angesprochen werden, um die folgenden Datenfelder auszuwerten. Das Feld Dat 1 teilt die Art der im ff. angeforderten Funktion, hier CMD für die dynamische LIN-ID-Vergabe, mit. Dieses Feld Dat 1 ist nur erforderlich, wenn noch weitere Funktionen definiert werden, die alle Slave-Busteilnehmer oder eine bestimmte Gruppe von Slave-Busteilnehmern betreffen. In den Feldern Dat2 bis Dat4 kann die Funktions- bzw. Nachrichtennummer NNr folgen. Im Feld Dat 5 folgt, wenn erforderlich, der zusätzliche Identifiziercode (KENNUNG). In Dat6 steht die LIN-ID, die zur vorhergehenden Nachrichtennummer NNr in den diese Nachrichtennummer enthaltenden Slave-Busteilnehmern abgespeichert werden soll. Das Feld Dat7 kann für weitere Besonderheiten frei gehalten werden.

Aus Fig. 2 ist ersichtlich, dass das Sonderbefehlstelegramm dasselbe LIN-Protokoll aufweist, wie das übliche Befehlstelegramm. Somit ist keine Protokollumschaltung erforderlich, um in der Initialisierungsphase die Vergabe der LIN-ID's zu realisieren. Dadurch ist auch die Kompatibilität zu bereits bestehenden Busmonitorgeräten sichergestellt.

Erfindungsgemäß wird bereits als Vorarbeit, z.B. in der Entwicklungsphase des Datenbusses, in Form eines Katalogs allen Funktionen, die von den Slave-Busteilnehmern des Datenbusses ausgeführt werden können, jeweils mindestens eine Funktionsnummer (NNr) zugeordnet. Hierbei wird die Maximalausstattung berücksichtigt. Die Anzahl der Funktionsnummern wird die Anzahl der möglichen LIN-ID's um ein Vielfaches übersteigen, daher können die Funktionsnummern NNr selbst nicht als LIN-ID verwendet werden, selbst wenn in einem Datenbus nicht alle Funktionsnummern benötigt werden. Außerdem ist das Kennungsfeld zu klein, um darin die Funktionsnummer NNr abzulegen.

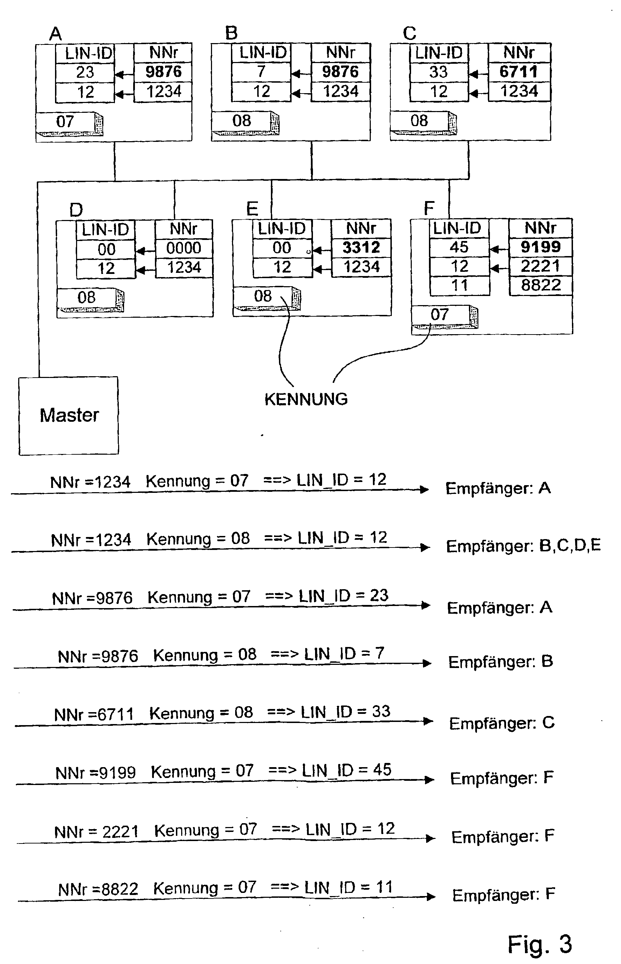

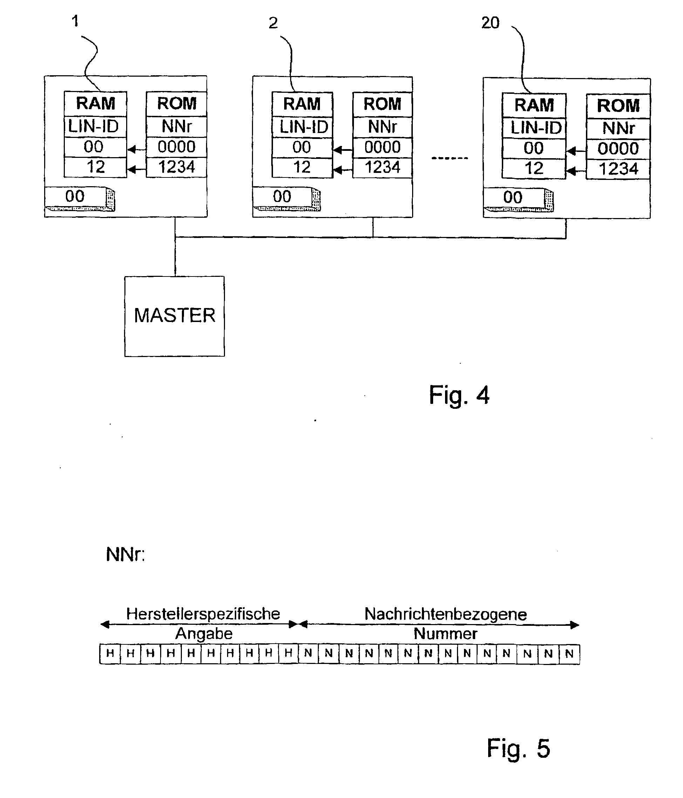

In Fig. 3 ist ein Datenbus mit einer elektronischen Hauptsteuereinheit MASTER und Slave-Busteilnehmern A, B, C, D, E und F dargestellt. Jeder Slave-Busteilnehmer A, B, C, D, E, F weist einen ersten nicht-flüchtigen Speicherbereich ROM (vgl. auch Fig. 4) auf, in dem die Funktionsnummern NNr der Funktionen fest abgespeichert sind, die von dem jeweiligen Slave-Busteilnehmer ausführbar sind. Jeder Slave-Busteilnehmer A, B, C, D, E, F weist einen zweiten programmierbaren Speicherbereich RAM auf (es kann beispielsweise auch ein EEPROM verwendet werden). Im RAM ist zu jeder im ersten Speicherbereich ROM abgespeicherten und für den hier speziell dargestellten Datenbus benötigten Funktionsnummer NNr eine für das Kennungsfeld (IDENT FIELD) vorgesehene Kennungsinformation (LIN-ID) abgespeichert. (vgl. auch Fig. 4)

Die Slave-Busteilnehmer A, B, C, D, E, F enthalten eine Kodiervorrichtung, z. B. in Form von Jumpern, zur manuellen Einstellung eines zusätzlichen Identifiziercodes (KENNUNG). Durch diese KENNUNG können die Slave-Busteilnehmer im Sonderbefehlstelegramm unterscheidbar gemacht werden, wenn zu einer Funktionsnummer, hier z.B. NNr=9876, in unterschiedlichen Slave-Busteilnehmern, hier z.B. A und B, unterschiedliche Kennungsinformationen, hier für A: LIN-ID=23 [DEC] (bezogen auf die 6 Bit laut LIN Protocol Specification) und für B: LIN-ID=7 [DEC], abgespeichert werden sollen. Dieser Identifiziercode KENNUNG entspricht jedoch keiner eindeutigen Komponenten- bzw. Slave-Busteilnehmeradresse. In Fig. 3 ist z. B. die KENNUNG 08 mehrfach vergeben worden.

Die Slave-Busteilnehmer A, B, C, D, E, F können sehr einfache Schalt-Komponenten, wie Glühlampenschalter, oder auch kleine intelligente Steuergeräte, wie diagnosefähige Stellmotorsteuerungen, sein. Die Slave-Busteilnehmer A, B, C, D, E, F sind jedoch in jedem Fall Slaves. Die Hauptsteuereinheit (MASTER) ist beispielsweise ein individuelles intelligentes Steuergerät, in dem der LIN-Datenbus logisch abgebildet ist. Für die Hauptsteuereinheit (MASTER) sind dabei folgende Informationen über die Slave-Busteilnehmer (Slaves) ausreichend:
- Alle Funktionen (d.h. die Nachrichten, die notwendig sind, um die Funktionen auszulösen), die mit dem jeweiligen LIN-Bus bzw. LIN-Bus-Verbund (wenn am Master mehrere LIN-Datenbusse angeschlossen sind) zum Einsatz kommen sollen,
- ggf. die Identifiziercodes (KENNUNG) der Slave-Busteilnehmer
- sowie ggf. die Verknüpfungslogik von KENNUNG und Nachrichtennummer NNr.

Man kann davon ausgehen, dass zumindest einige Slave-Busteilnehmer geringe Diagnosefähigkeiten besitzen. In diesem Fall muss die Hauptsteuereinheit (MASTER) in der Lage sein, mit genau einem Slave-Busteilnehmer kommunizieren zu können. Auch soll sowohl ein Datentransfer von der Hauptsteuereinheit zu den Slave-Busteilnehmern (Nebensteuereinheiten bzw. Slaves) als auch von Slave-Busteilnehmern zur Hauptsteuereinheit durchführbar sein. Dies erzwingt mindestens zwei Nachrichten die jeder Nebensteuereinheit zumindest bekannt sind (auch wenn die Nebensteuereinheit nicht diagnosefähig ist, muss es wenigstens wissen, dass so eine Nachricht von der Nebensteuereinheit nicht ausgewertet werden darf). Die für diese Nachrichten verwendeten LIN-Id's sind als reserviert zu betrachten (und somit sind im Beispiel LIN-Bus auch zwei Lin-IDs vergeben, die später auch nicht vom Master dynamisch vergeben werden dürfen). Eine dieser reservierten LIN-ID's kann auch als die LIN-ID definiert werden, die zum Ausführen der dynamischen LIN-ID-Vergabe im Sonderbefehlstelegramm verwendet wird. Ein Slave-Busteilnehmer (LIN-Slave) ist in der Lage n Befehlstelegramme softwarebedingt zu verarbeiten. Daher wird erfindungsgemäß von jedem Slave-Busteilnehmer gefordert, dass zu jedem dieser Befehlstelegramme eine Funktions- bzw. Nachrichtennummer NNr existiert. In diesem Fall haben baugleiche Slave-Busteilnehmer auch gleiche Software und Funktionsnummern NNr, die im ROM des Slave-Busteilnehmers dauerhaft gespeichert werden müssen. Zu jeder Funktionsnummer NNr muss es im RAM eine zugeordnete 8 Bit (1 Byte) Speicherzelle geben, in die eine dieser Funktionsnummer zugeordnete LIN-ID vom MASTER abgespeichert werden kann. Defaultwert dieser Speicherzelle ist z.B. 00 [DEC].

In einem Slave-Busteilnehmer können mehr Funktionsnummern NNr abgelegt sein als später an einem konkreten LIN-Bus bzw. LIN-Bus-Verbund eingesetzt werden. Funktionsnummernbereiche können durch das LIN-Konsortium verwaltet werden. Ein Slave-Busteilnehmer-Lieferant bzw. - Hersteller kann in diesem Fall Funktionsnummern NNr aus seinem Nummernbereich frei wählen, ohne eine Überdeckung mit anderen Herstellern zu fürchten.

In Fig. 4 ist ein vereinfachtes Beispiel dargestellt:
Bei einem LIN-Bus mit 20 Glühlampen als Slave-Busteilnehmer wird ausschließlich über genau ein Befehlstelegramm der Dimmungswert vom MASTER gesendet. Es ist nicht notwendig die Slave-Busteilnehmer zu unterscheiden, da alle dieselbe Funktion erfüllen. In jedem Slave-Busteilnehmer liegt nur eine dieser Funktion zugeordnete Funktionsnummer NNr = 1234 vor, zu der die LIN-ID 12 abgespeichert wird. Die KENNUNG wird nicht benötigt. Die KENNUNG aller Busteilnehemr ist daher gleich und kann den Defaultwert 00 aufweisen.

In Fig. 5 ist ein möglicher Aufbau der Funktionsnummer NNr dargestellt:
Hierfür wird eine 3 Byte lange Nummer vorgesehen. Diese Nummer unterteilt sich in 2 Teile: Die ersten 10 Bit geben Aufschluss auf den Slave-Hersteller. Diese Nummern werden vom LIN-Konsortium an Slavehersteller vergeben (ca. 1000 Hersteller möglich). Die aus den restlichen 14 Bit gebildete Nummer wird vom Hersteller einer im Slave abgebildeten Nachricht zugeordnet.
Der Slave-Hersteller wird ein Datenblatt zu einem Slave herausgeben, indem beschrieben ist, wie die Nachricht (mit dazugehöriger Datenlänge) zu einer NNr aufgebaut ist (z.B. Längeninformation, Lage der Bits, ...).

Ergänzung zur Struktur der Funktions- bzw. Nachrichtennummer NNr:
Die Nachrichtennummer NNr kann so aufgebaut sein, dass folgende Merkmale des Slave-Busteilnehmers erkennbar werden:
   - Herstellerspezifische Angaben
   - Bauart des Slave-Busteilnehmers, z.B. unterteilt in Sensor, Aktuator, Aktuator und Sensor, usw.
   - NNr bezieht sich auf Nachricht vom Master zum Slave oder vom Slave zum Master
   - NNr ist Nachricht für alle

Wenn alle Slave-Busteilnehmer von mehreren Slave-Busteilnehmern gleicher Bauart im Hinblick auf dieselbe Funktion bzw. Funktionsnummer NNr identifizierbar senden und identifizierbar empfangen können müssen, muss die Verknüpfung von der KENNUNG dieser Slave-Busteilnehmer und der Funktionsnummer NNr einen "Code" ergeben, der im Datenbus-Verbund eindeutig und einmalig ist. Daraus folgt, dass die dazu zugeordneten LIN-iDs auch einmalig im Busverbund sind. Dies kann dazu verwendet werden, um eine Nebensteuereinheit bzw. einen Slave-Busteilnehmer auch physikalisch eindeutig identifizieren zu können. Dies ist für Diagnosezwecke besonders wertvoll. Beim LIN-Bus müssen beispielsweise alle Nachrichten von einem Slave an den Master mit einer im Busverbund einmaligen LIN-ID versehen sein. (Denn nur genau ein Slave darf zum Zeitpunkt x laut LIN-Protokoll Spezifikation ein Telegramm an den Master senden. Senden mehrere Slaves gleichzeitig so wird die Response in der LIN-Nachricht zerstört.)

Der Master kann theoretisch ständig und beliebig die LIN-ID's umordnen. Dadurch ist es möglich, mit LIN-konformen Befehlstelegrammen mehr als 64 Funktionen zu adressieren. Dieser "Trick" erfordert zwar mehr Verwaltungsaufwand im Hauptsteuergerät (Master), hat aber keine Auswirkung auf die Slave-Busteilnehmer (LIN-Slaves). Anstelle von unabhängigen Bussen oder Bus-Verbunden mit jeweils eigener Hauptsteuereinheit können z.B. gezielte Teil-Bus- bzw. Teil-Busverbund-Betriebe erzeugt werden:
Hierzu kann erfindungsgemäß von der Hauptsteuereinheit (MASTER) vorteilhafterweise eine Kennungsinformation, die zu einer für eine bestimmte Zeit nicht benötigten Funktion bzw. Funktionnummer (NNr) in einem Slave-Busteilnehmer abgespeichert ist, zumindest für diese bestimmte Zeit einer anderen z. B. für diese bestimmte Zeit benötigten Funktion bzw. Funktionsnummer in einem beliebigen Slave-Busteilnemer desselben Busses oder Bus-Verbundes abgespeichert werden. D.h. von der Hauptsteuereinheit wird eine Kennungsinformation (LIN-ID), die zumindest für eine vorgegebene erste Zeit zu einer Funktion bzw. Funktionnummer in einem Slave-Busteilnehmer abgespeichert ist, zumindest für eine vorgegebene zweite Zeit außerhalb der vorgegebenen ersten Zeit zu einer anderen Funktion bzw. Funktionsnummer in einem beliebigen (demselben oder einem anderen) Slave-Busteilnehmer abgespeichert.

Durch diese "Intelligente Software" in der Hauptsteuereinheit kann der Nachteil der geringen Anzahl von Kennungsinformationen verbessert werden.

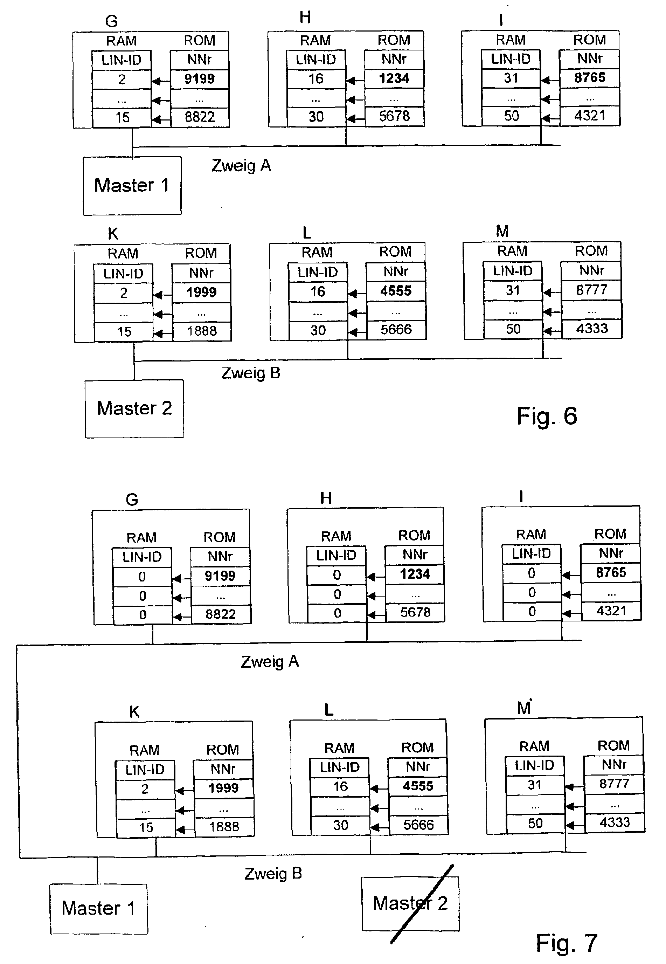

Diese erfindungsgemäße Weiterbildung wird am Beispiel des LIN-Bus-Verbundes anhand der Figuren 6 und 7 näher erläutert:
(Zur Vereinfachung ist in den Figuren 6 und 7 der Identifiziercode (KENNUNG) in den Busteilnehmern nicht dargestellt. Der Identifiziercode (KENNUNG) hat in diesen Beispielen keine Bedeutung, da die Funktionsnummern (NNr) bereits eindeutig sind.)

In Fig. 6 sind zwei funktionell unterschiedliche LIN-Bussysteme unabhängig voneinander dargestellt. Ein erstes LIN-Bus-System besteht aus dem Master 1 und den Slave-Busteilnehemrn G, H und I (Zweig A). Das zweite LIN-Bus-System besteht aus dem Master 2 und den Slave-Busteilnehmern K, L und M (Zweig B). In jedem LIN-Bus-System werden z.B. 50 (von 64 möglichen) Kennungsinformationen in Form von LIN-ID's (auch Nachrichtenidentifier genannt) verwendet. Fig. 6 zeigt die LIN-Bus-Systeme, nachdem die dynamische Zuordnung von Kennungsinformationen (LIN-ID's) bereits stattgefunden hat (Vorgehensweise wie z. B. zu Fig. 3 beschrieben). Die Zweige A und B verwenden jeweils zu unterschiedlichen Funktionsnummern NNr die LIN-ID's 2,15,16,30,31 und 50.

In Fig. 7 sind beide LIN-Bus-Systeme gemäß Fig. 6 vereinigt. Dabei ordnet der hier einzige Master 1 (Master 2 wird nicht mehr benötigt) -insbesondere zu einer vorgegebenen ersten Zeit- allen Nachrichtennummern NNr des Zweiges A die LIN-ID 0 zu. Im Zweig B werden die LIN-ID's entsprechend dem zweiten LIN-Bus-System nach Fig. 6 verteilt. Da das Hauptsteuergerät (Master 1) LIN-ID's dynamisch und beliebig zuordnen kann, kann die Zuordnung der LIN-ID 0 -zu einer vorgegebenen zweiten Zeit- auch an alle Funktionsnummern NNr im Zweig B geschehen. Die Umordnung der Kennungsinformationen, hier LIN-ID's, kann sich zur Laufzeit des gesamten Systems beliebig oft vollziehen.

Vorteile des genannten Verfahrens:
- Quasi-Aufweitung des Kennungsinformationsraumes
- Die Anzahl von (physikalischen) Mastersteuergeräten kann minimiert werden.

Möglicher Einsatz und Verwendung:
Im Automobilbau können beispielsweise die Klimaanlage und die Standheizung von einer Hauptsteuereinheit aus verwaltet werden. Hierbei würde sich auch der LIN-Bus eignen. Der Standheizer wird bei gesichertem und stehendem Fahrzeug verwendet (vorgegebene erste Zeit); die Klimaanlage nur,
wenn der Motor läuft (vorgegebene zweite Zeit). Beide Systeme sind logisch voneinander trennbar. Daher könnten mit einer Hauptsteuereinheit (Master) beide Funktionseinheiten nach obigem Schema angesteuert werden.

Ergänzend wird darauf hingewiesen, dass die Erfindung nicht auf den LIN-Bus beschränkt ist, jedoch für die Verwendung beim LIN-Bus besonders vorteilhaft ist.

Beispielsweise kann das Verfahren auch auf andere Datenbussysteme übertragen werden, wie beispielsweise auf den CAN-Bus (Multi-Master Bussystem). In einem CAN-Bussystem kann man sich ein (oder mehrere) CAN-Steuergerät vorstellen, das (kurzzeitig) als Hauptsteuereinheit den Umgang mit den CAN-Kennungsinformationen übernimmt und diese dynamisch vergibt. (Die anderen CAN-Steuergeräte werden zu diesem Zeitpunkt zu Nebensteuereinheiten.) Dabei ist auch denkbar, dass dies auch von mehreren CAN-Steuergeräten durchgeführt wird, die wechselweise kurzzeitig zur Hauptsteuereinheit im CAN-Verbund werden und jeder die Zuständigkeit für einen Bereich von Funktionsnummern NNr übernimmt. Auch beim CAN ist eine Protokollumschaltung für das Sonderbefehlstelegramm nicht notwendig, da mehr Datenfelder zur Verfügung stehen.

## Patentansprüche

1. Datenbus, insbesondere in Kraftfahrzeugen und in der Automatisierungstechnik, mit Slave-Busteilnehmern, die aufgrund von adressierten Befehlstelegrammen einer ebenfalls am Datenbus angeschlossenen elektronischen Hauptsteuereinheit Funktionen ausführen, wobei die Befehlstelegramme zur Adressierung der Befehle ein Kennungsfeld (IDENT FIELD) enthalten, für das eine beschränkte Anzahl vom Kennungsinformationen (LIN-ID) vorgesehen ist, **dadurch gekennzeichnet, dass** allen Funktionen, die von den Slave-Busteilnehmern des Datenbusses ausgeführt werden können, jeweils mindestens eine Funktionsnummer (NNr) zugeordnet wird, dass jeder Slave-Busteilnehmer (A, B, C, D, E, F; 1, 2,...20) einen ersten nicht-flüchtigen Speicherbereich (ROM) aufweist, in dem die Funktionsnummern (NNr) der Funktionen fest abgespeichert sind, die von dem jeweiligen Slave-Busteilnehmer ausführbar sind, und dass jeder Slave-Busteilnehmer einen zweiten programmierbaren Speicherbereich (RAM) aufweist, in dem durch ein Sonderbefehlstelegramm der elektronischen Hauptsteuereinheit (MASTER) zu jeder im ersten Speicherbereich abgespeicherten Funktionsnummer (NNr) eine für das Kennungsfeld (IDENT FIELD) vorgesehene Kennungsinformation (LIN-ID) abgespeichert werden kann.

2. Datenbus nach Patentanspruch 1, **dadurch gekennzeichnet, dass** die Slave-Busteilnehmer eine Kodiervorrichtung zur Erzeugung eines zusätzlichen Identifiziercodes (KENNUNG) enthalten, durch die die Slave-Busteilnehmer (A, B, C, D, E, F) im Sonderbefehlstelegramm der elektronischen Hauptsteuereinheit bei Bedarf unterscheidbar gemacht werden können.

3. Datenbus nach Patentanspruch 1 oder 2, **dadurch gekennzeichnet, dass** für das Kennungsfeld (IDENT FIELD) des Sonderbefehlstelegramms eine definierte Kennungsinformation (LIN-ID=00111100) vorgesehen wird, durch die alle Slave-Busteilnehmer (A, B, C, D, E, F; 1, 2,... 20) angesprochen werden können.

4. Datenbus nach Patentanspruch 3, **dadurch gekennzeichnet, dass** nach dem Kennungsfeld (IDENT FIELD) im Sonderbefehlstelegramm zumindest die Funktionsnummer (NNr) und die ihr zuzuordnende Kennungsinformation (LIN-ID) folgt.

5. Datenbus nach Patentanspruch 3, **dadurch gekennzeichnet, dass** nach dem Kennungsfeld (IDENT FIELD) im Sonderbefehlstelegramm zumindest die Funktionsnummer (NNr), der Identifiziercode (KENNUNG) und die der Kombination von Funktionsnummer (NNr) und Identifiziercode (KENNUNG) zuzuordnenden Kennungsinformation (LIN-ID) folgt.

6. Datenbus nach einem der Patentansprüche 1 bis 5, **dadurch gekennzeichnet, dass** von der Hauptsteuereinheit (MASTER) eine Kennungsinformation (LIN-ID), die zumindest für eine vorgegebene erste Zeit zu einer Funktion bzw. Funktionsnummer (NNr: 9199, 8822; 1234, 5678; 8765, 4321) in einem Slave-Busteilnehmer (G; H; I) abgespeichert ist (2, 15; 16, 30; 31, 50), zumindest für eine vorgegebene zweite Zeit außerhalb der vorgegebenen ersten Zeit zu einer anderen Funktion bzw. Funktionsnummer (NNr: 1999, 1888; 4555, 5666; 8777, 4333) in einem beliebigen Slave-Busteilnehmer (K, L, M) abgespeichert wird.

7. Slave-Busteilnehmer für einen Datenbus nach einem der Patentansprüche 1 bis 6 mit einem ersten nicht-flüchtigen Speicherbereich (ROM), in dem die Funktionsnummern (NNr) der Funktionen fest abgespeichert sind, die von dem jeweiligen Slave-Busteilnehmer ausführbar sind, und mit einem zweiten programmierbaren Speicherbereich (RAM), in dem durch ein Sonderbefehisteiegramm der Hauptsteuereinheit (MASTER) zu jeder im ersten Speicherbereich abgespeicherten Funktionsnummer eine für das Kennungsfeld (IDENT FIELD) vorgesehene Kennungsinformation (LIN-ID) abgespeichert werden kann.

8. Slave-Busteilnehmer nach Patentanspruch 7 mit einer Codiervorrichtung zum programmierbaren Einstellen eines zusätzlichen Identifiziercodes (KENNUNG).

9. Elektronische Hauptsteuereinheit für einen Datenbus nach einem der Patentansprüche 1 bis 6 mit einer Vorrichtung zur Erzeugung des Sonderbefehistelegramms.

## Claims

1. A data bus, especially in motor vehicles and in automation technology, having slave nodes that execute functions based on addressed command messages from an electronic main control unit that is also connected to the data bus, wherein the command messages contain an identifier field (IDENT FIELD) for addressing the commands, for which a limited amount of identifying information (LIN-ID) is provided, **characterised in that** all the functions, which can be executed by the slave nodes of the data bus are respectively assigned at least one function number (NNr), **in that** each slave node (A, B, C, D, E, F; 1, 2,...20) has a first non-volatile memory area (ROM), in which the function numbers (NNr) of the functions that can be executed by the respective slave node are permanently stored, and **in that** each slave node has a second programmable memory area (RAM), in which for each function number (NNr) stored in the first memory area, identifying information (LIN-ID) provided for the identifier field (IDENT FIELD) can be stored by means of a special command message from the electronic main control unit (MASTER).

2. A data bus according to claim 1, **characterised in that** the slave nodes contain a coding device for producing an additional identifying code (IDENTIFIER), by means of which the slave nodes (A, B, C, D, E, F) in the special command message of the electronic main control unit can be made distinguishable if necessary.

3. A data bus according to claim 1 or 2, **characterised in that** for the identifier field (IDENT FIELD) of the special command message, a defined piece of identifying information (LIN-ID=00111100) is provided, by means of which all the slave nodes (A, B, C, D, E, F; 1, 2,...20) can be addressed.

4. A data bus according to claim 3, **characterised in that** at least the function number (NNr) and the identifying information (LIN-ID) to be assigned thereto follow after the identifier field (IDENT FIELD) in the special command message.

5. A data bus according to claim 3, **characterised in that** at least the function number (NNr), the identifying code (IDENTIFIER) and the identifying information (LIN-ID) to be assigned to the combination of function number (NNr) and identifying code (IDENTIFIER) follow after the identifier field (IDENT FIELD) in the special command message.

6. A data bus according to any one of claims 1 to 5, **characterised in that** identifying information (LIN-ID), which is stored (2, 15; 16, 30; 31, 50), at least for a predetermined first period for a function or function number (NNr: 9199, 8822; 1234, 5678; 8765, 4321) in a slave node (G; H; I) by the main control unit (MASTER), is stored at least for a predetermined second period outside the predetermined first period for a different function or function number (NNr: 1999, 1888; 4555, 5666; 8777, 4333), in any slave node (K, L, M).

7. A slave node for a data bus according to any one of claims 1 to 6 having a first non-volatile memory area (ROM), in which the function numbers (NNr) of the functions that can be executed by the respective slave node are permanently stored, and having a second programmable memory area (RAM), in which, for each function number stored in the first memory area, identifying information (LIN-ID) provided for the identifier field (IDENT FIELD) can be stored by means of a special command message from the main control unit (MASTER).

8. A slave node according to claim 7 having a coding device for the programmable adjustment of an additional identifying code (IDENTIFIER).

9. An electronic main control unit for a data bus according to any one of claims 1 to 6 having a device for producing the special command message.

## Revendications

1. Bus de données en particulier destiné à des véhicules ou à la technique d'automatisation comportant des utilisateurs du bus esclaves qui exécutent des fonctions, à partir de télégrammes d'instructions de commande adressés d'une unité de commande principale électronique également reliée au bus de données, les télégrammes d'instructions de commande renfermant pour l'adressage des instructions de commande un champ d'identification (IDENT FIELD) pour lequel il est prévu un nombre limité d'informations d'identification (LIN-ID),
**caractérisé en ce qu'**
à toutes les fonctions qui peuvent être exécutées par les utilisateurs du bus esclaves du bus de données est respectivement associé au moins un numéro de fonction (NNr), chaque utilisateur du bus esclave (A, B, C, D, E, F ; 1, 2, ...20) comporte une première zone de mémoire non volatile (ROM) dans laquelle sont enregistrés de façon fixe les numéros (NNr) des fonctions qui peuvent être exécutées par l'utilisateur du bus esclave respectif, et chaque utilisateur du bus esclave comporte une seconde zone de mémoire programmable (RAM) dans laquelle peut être enregistrée, par un télégramme d'instructions de commande particulier de l'unité de commande principale électronique (MASTER) pour chacun de numéros de fonction (NNr) enregistrés dans la première zone de mémoire une information d'identification (LIN-ID) prévue pour le champ d'identification (IDENT-FIELD).

2. Bus de données conforme à la revendication 1,
**caractérisé en ce que**
les utilisateurs du bus esclaves comprennent un dispositif de codage pour permettre l'obtention d'un code d'identificateur supplémentaire (KENNUNG) par lequel les utilisateurs du bus esclaves (A, B, C, D, E, F) peuvent être en cas de besoin rendu distincts dans le télégramme d'instructions de commande particulier de l'unité de commande principale électronique.

3. Bus de données conforme à la revendication 1 ou 2,
**caractérisé en ce qu'**
il est prévu pour le champ d'identification (IDENT-FIELD) du télégramme d'instructions de commande particulier une information d'identification définie (LIN-ID = 00111100) par laquelle tous les utilisateurs du bus esclaves (A, B, C, D, E, F ; 1, 2, ...20) peuvent être caractérisés.

4. Bus de données conforme à la revendication 3,
**caractérisé en ce qu'**
le champ d'identification (IDENT-FIELD), est suivi dans le télégramme d'instructions de commande particulier au moins par le numéro de fonction (NNr) et par l'information d'identification (LIN-ID) devant lui être associée.

5. Bus de données conforme à la revendication 3,
**caractérisé en ce que**
le champs d'identification (IDENT-FIELD), est suivi dans le télégramme d'instructions de commande particulier au moins par le numéro de fonction (NNr), le code d'identificateur (KENNUNG) et l'information d'identification (LIN-ID) devant être associée à la combinaison du numéro de fonction (NNr) et du code d'identification (KENNUNG).

6. Bus de données conforme à l'une des revendications 1 à 5,
**caractérisé en ce que**
l'unité de commande principale (MASTER) enregistre une information d'identification (LIN-ID) qui est enregistrée dans un utilisateur du bus esclave (G, H, I) au moins pendant une première durée prédéfinie pour une fonction ou un numéro de fonction (NNr : 9199, 8822, 1234, 5678, 8765, 4321) (2, 15, 16, 30, 31, 50) dans un utilisateur du bus esclave quelconque (K, L, M) au moins pendant une seconde durée prédéfinie située en dehors de la première durée prédéfinie pour une autre fonction ou un autre numéro de fonction (NNr 1999, 1888, 4555, 5666, 8777, 4333).

7. Utilisateur de bus esclave pour un bus de données conforme à l'une des revendications 1 à 6 comportant une première zone de mémoire non volatile (ROM) dans laquelle les numéros de fonction (NNr) des fonctions qui peuvent être exécutées par l'utilisateur du bus esclave respectif sont enregistrés de façon fixe, et une seconde zone de mémoire programmable (RAM) dans laquelle peut être enregistrée par un télégramme d'instructions de commande particulier de l'unité de commande principale (MASTER) pour chacun des numéros de fonction enregistrés dans la première zone de mémoire, une information d'identification (LIN-ID) prévue pour le champ d'identification (IDENT-FIELD).

8. Utilisateur de bus esclave pour un bus de données conforme à la revendication 7, comprenant un dispositif de codage permettant le réglage d'un code d'identificateur supplémentaire (KENNUNG).

9. Unité de commande principale électronique pour un bus de données conforme à l'une des revendications 1 à 6, comportant un dispositif permettant d'obtenir le télégramme d'instructions de commande particulier.
